Europäisches Patentamt

**European Patent Office**

Office européen des brevets

(11) Veröffentlichungsnummer: **0 094 651**

A2

(12) ## EUROPÄISCHE PATENTANMELDUNG

(21) Anmeldenummer: 83104758.4

(22) Anmeldetag: 14.05.83

(51) Int. Cl.³: **B 27 D 1/00**
**B 32 ·B 21/14**

(30) Priorität: 19.05.82 DE 3218888

(43) Veröffentlichungstag der Anmeldung:
23.11.83 Patentblatt 83/47

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Homanner, Alfons
Kronberger Weg 32
D-6231 Sulzbach(DE)

(72) Erfinder: Zimmermann, Wolfgang, Dr.
Im Stückes 48
D-6233 Kelkheim (Taunus)(DE)

(54) Schichtwerkstoff auf Basis eines Holzfurniers.

(57) Ein Schichtwerkstoff (Laminat) besteht aus einem Holzfurnier mit einer Dicke von 0,4 bis 2,0 mm und einer
Polyvinylalkohol-Folie mit einer Dicke von 0,01 bis 0,5 mm.
Die Folie ist mit Hilfe eines Klebstoffs mit dem Holzfurnier
verbunden. Das Holzfurnier ist vorzugsweise ein Laubholzfurnier. Der Schichtwerkstoff ist durch eine erhöhte Reißfestigkeit ausgezeichnet; er eignet sich daher auch zum
Furnieren von nicht ebenen Flächen.

FIG.1

FIG.2

## Schichtwerkstoff auf Basis eines Holzfurniers

Die Erfindung bezieht sich auf einen Schichtwerkstoff auf Basis eines Holzfurniers, ein Verfahren zur Herstellung dieses Schichtwerkstoffs und die Verwendung des Schichtwerkstoffs als Furniermaterial.

Furniere sind bekanntlich dünne Holzblätter, die mehrere mm dick sein können und durch Sägen oder "Messern" von Holzblöcken oder durch Schälen von runden Holzstämmen hergestellt werden (vgl. DIN 68 330). Sie werden vorwiegend aus wertvollen Hölzern mit dekorativem Holzbild, z.B. Mahagoni, Nußbaum, Eiche und Palisander,für Außen- und Innenfurniere erzeugt. Außenfurniere werden auf die Außenfläche und Innenfurniere auf die Innenfläche von Werkstücken, z.B. Holzbrettern, Spanplatten und Möbelteilen, geleimt.

Holzfurniere verfügen quer zur Faserrichtung nur über eine geringe Zugfestigkeit. Daher neigen Furniere beim Biegen um die Achse der Faserrichtung zum Brechen, so daß Risse und Fugen auftreten. Das Furnieren von Hohlkehlen und Rundungen an Werkstücken ist aus diesem Grunde schwierig und nur begrenzt möglich. So wurde bereits versucht, die Bruchneigung von Furnieren dadurch zu mindern, daß man nichtgewebte Vliese auf die Rückseite der Furniere klebte,um dadurch die mangelhafte Festigkeit der Furniere zu verbessern. Allerdings waren diese Versuche unbefriedigend, da das Vlies nur schlecht auf dem Furnier haftete und die Festigkeit des Vlieses auf die Dauer nicht ausreichte,um die Spaltung des Furniers zu verhindern.

Aufgabe der Erfindung ist nun die Bereitstellung eines Holzfurniers, das mit einer flexiblen Folie beschichtet ist und dadurch eine erhöhte Festigkeit aufweist.

Die Erfindung betrifft einen Schichtwerkstoff auf Basis eines Holzfurniers und ist dadurch gekennzeichnet, daß der Schichtwerkstoff aus einem Holzfurnier mit einer Dicke von 0,4 bis 2,0 mm besteht, das mindestens einseitig mittels eines Klebstoffs mit einer Folie aus Polyvinylalkohol, deren Dicke 0,01 bis 0,5 mm beträgt, verbunden ist.

Die Erfindung betrifft ferner ein Verfahren zur Herstellung eines Schichtwerkstoffs auf Basis eines Holzfurniers durch Verbindung eines Holzfurniers mit einem elastischen, schichtförmigen Werkstoff, das dadurch gekennzeichnet ist, daß ein Holzfurnier mit einer Dicke von 0,4 bis 2,0mm mindestens einseitig mittels eines Klebstoffs mit einer Folie aus Polyvinylalkohol, deren Dicke 0,01 bis 0,5 mm beträgt, verbunden wird.

Weiterhin betrifft die Erfindung die Verwendung des vorstehend gekennzeichneten Schichtwerkstoffs als Material zum Furnieren von Gegenständen aus Vollholz oder Holzwerkstoff.

Grundlage des erfindungsgemäßen Schichtwerkstoffs ist ein Holzfurnier mit einer Dicke von 0,4 bis 2 mm, vorzugsweise 0,5 bis 1,5 mm. Das Furnier ist ein Schälfurnier oder vorzugsweise ein Messerfurnier. Bevorzugt ist ein Laubholzfurnier, z.B. Eiche, Nußbaum, Kirschbaum und Teak.

Wesentlicher Bestandteil des Schichtwerkstoffs ist eine Folie aus Polyvinylalkohol, deren Dicke 0,01 bis 0,5 mm, vorzugsweise 0,02 bis 0,2 mm beträgt und die mittels eines Klebstoffs mit dem Holzfurnier verbunden ist. Das Furnier ist vorzugsweise nur auf einer Seite mit der Folie verklebt, es kann aber auch auf beiden Seiten mit einer Folie verbunden sein. Das einseitig beschichtete Furnier eignet sich insbesondere als Deckfurnier, während das beidseitig beschichtete Furnier vor allem als Unterfurnier und als Absperrfurnier geeignet ist.

Die Folie besteht aus einem weichmacherhaltigen Polyvinylalkohol (PVAL), der eine Esterzahl von vorzugsweise 0 bis 200 mg KOH/g und dessen 4gewichtsprozentige wäßrige Lösung bei einer Temperatur von 20°C eine Viskosität von vorzugsweise 4 bis 100 mPa·s aufweist. Besonders geeignet ist ein Polyvinylalkohol mit einer Esterzahl von 10 bis 150 mg KOH/g, dessen 4gewichtsprozentige wäßrige Lösung bei einer Temperatur von 20°C eine Viskosität von 10 bis 60 mPa·s aufweist.

Als Ausgangsmaterial zur Herstellung der Folie dient insbesondere ein weichmacherhaltiges PVAL-Granulat; dieses besteht zu mindestens 70 Gewichtsprozent, vorzugsweise mindestens 90 Gewichtsprozent, aus Partikeln mit einem Durchmesser von 0,8 bis 4 mm, in denen ein Weichmacher und gegebenenfalls eine feinteilige, in Wasser lösliche oder dispergierbare, hochmolekulare organische Verbindung homogen verteilt vorliegen. Dieses Granulat wird in bekannter Weise dadurch hergestellt, daß 100 Gewichtsteile eines trockenen PVAL-Granulats, das zu mindestens 70 Gewichtsprozent aus Partikeln mit einem Durchmesser von 0,4 bis 4 mm besteht, mit 5 bis 50 Gewichtsteilen eines Weichmachers - gegebenenfalls in Gegenwart von 1 bis 15 Gewichtsteilen einer feinteiligen, in Wasser löslichen oder dispergierbaren, hochmolekularen organischen Verbindung, die aus Partikeln mit Durchmessern von höchstens 0,3 mm besteht - in Gegenwart einer solchen Menge Wasser, die unter Normalbedingungen zur Lösung des PVAL nicht ausreicht, intensiv und homogen miteinander vermischt werden; während des Mischvorganges wird die Temperatur des Gemisches derart erhöht und wieder gesenkt, daß die PVAL-Partikel quellen und vorübergehend agglomerieren (vgl. europäische Anmeldungsveröffentlichung Nr. 4587).

- 4 -                    0094651

Die erfindungsgemäß verwendete Folie wird durch übliche Verfahren hergestellt, insbesondere nach dem Gießverfahren, Breitschlitzextrusionsverfahren oder vorzugsweise Blasextrusionsverfahren. Im Bedarfsfall kann die Wasserlöslichkeit der Folie mechanisch oder chemisch modifiziert werden, insbesondere durch biaxiale Verstreckung oder durch partielle Vernetzung. Als Vernetzungsmittel dienen dabei Verbindungen, die mit den Hydroxylgruppen des PVAL reagieren. Insbesondere eignen sich bifunktionelle Verbindungen wie Bisepoxide und Diisocyanate sowie vorzugsweise Formaldehyd oder Formaldehyd abspaltende Verbindungen und auch Dialdehyde, z.B. Glyoxal oder Terephthalaldehyd.

Im Rahmen der Erfindung ist eine PVAL-Folie, die in kaltem Wasser unlöslich, aber in heißem Wasser löslich ist, besonders geeignet. Hierbei wird unter "kalt" eine Temperatur von höchstens 30°C und unter "heiß" eine Temperatur von mindestens 50°C verstanden.

Die Polyvinylalkohol-Folie wird erfindungsgemäß mittels eines Klebstoffs mit dem Holzfurnier verbunden. Als Klebstoff wird vorzugsweise ein Dispersionsklebstoff auf Basis eines Kunstharzes verwendet, d.h. eine wäßrige Kunststoff-Dispersion mit einem Feststoffgehalt von 40 bis 65, vorzugsweise 50 bis 60 Gewichtsprozent. Als Kunststoff-Dispersion eignen sich beispielsweise handelsübliche Dispersionen von Styrol/Acrylsäureester-Copolymeren sowie insbesondere Dispersionen auf Basis von Polyvinylacetat oder auf Basis von Vinylacetat-Copolymeren, z.B. Copolymeren des Vinylacetats mit Ethylen, Acrylsäureestern, Maleinsäurediestern oder höheren Vinylestern wie Vinyldecanaten und Terpolymeren aus Vinylacetat, Ethylen und Vinylchlorid. Die Teilchengröße (durchschnittlicher Durchmesser) der dispergierten Polymerpartikel liegen im allgemeinen im Bereich von 0,01 bis 5 µm, vorzugsweise von 0,2 bis 3 µm, d.h. die Kunststoffdispersion ist grobdispers bis mitteldispers. Die Kunststoff-Dispersion enthält gegebenenfalls einen üblichen Weichmacher, insbesondere einen Phthalsäurediester wie Dibutylphthalat oder Benzylbutylphthalat.

Andere geeignete Klebstoffe sind Glutinleime, z.B. Knochenleim, und wäßrige Polyvinylalkohol-Lösungen, deren PVAL-Gehalt 5 bis 35, vorzugsweise 10 bis 25 Gewichtsprozent beträgt. Der hier eingesetzte PVAL hat eine Esterzahl von 4 bis 190, vorzugsweise 20 bis 140 mg KOH/g, und die 4gewichtsprozentige wäßrige Lösung des PVAL hat bei einer Temperatur von 20°C eine Viskosität von 2,6 bis 66, vorzugsweise 18 bis 28 mPA·s.

Der Klebstoff wird üblicherweise mit Hilfe einer Rolle oder Walze gleichmäßig auf das Holzfurnier aufgetragen. Die aufgetragene Klebstoffmenge beträgt 30 bis 200, vorzugsweise 50 bis 100 g/m$^2$. Auf die noch feuchte Klebstoffschicht wird dann die PVAL-Folie aufgebracht und vorzugsweise mit einer Andruckvorrichtung, z.B. einer Druckwalze, einem Druckband oder einem Druckbalken, angedrückt; dabei beträgt der Druck auf die Folie 1 bis 8, vorzugsweise 2 bis 4 bar. Zur Beschleunigung der Verklebung empfiehlt es sich, die Andruckvorrichtung zu beheizen, und zwar auf eine Temperatur von 50 bis 150°C, vorzugsweise 70 bis 100°C.

Die Folie ist üblicherweise vollflächig mit dem Holzfurnier verbunden, d.h. die gesamte Fläche des Holzfurniers ist mit der Folie bedeckt. Bei Bedarf kann die Folie aber auch in Form getrennter Streifen mit dem Holzfurnier verbunden sein, insbesondere an solchen Teilen des Furniers, die besonders leicht beschädigt werden können, z.B. die Stirnkanten.

Der erfindungsgemäße Schichtwerkstoff dient als Material zum Furnieren von Gegenständen aus Vollholz oder Holzwerkstoff wie Holzspanplatten und Holzfaserplatten. Die auf das Furnier aufgeklebte PVAL-Folie ist transparent und lösemittelbeständig und stellt einen geschlossenen Film dar, der das Furnier gegen äußere Einflüsse schützt und die Reißfestigkeit des Furniers stark verbessert. Der Schichtwerkstoff eignet sich auch zum Furnieren von gewölbten oder gekehlten Flächen und abgerundeten Kanten.

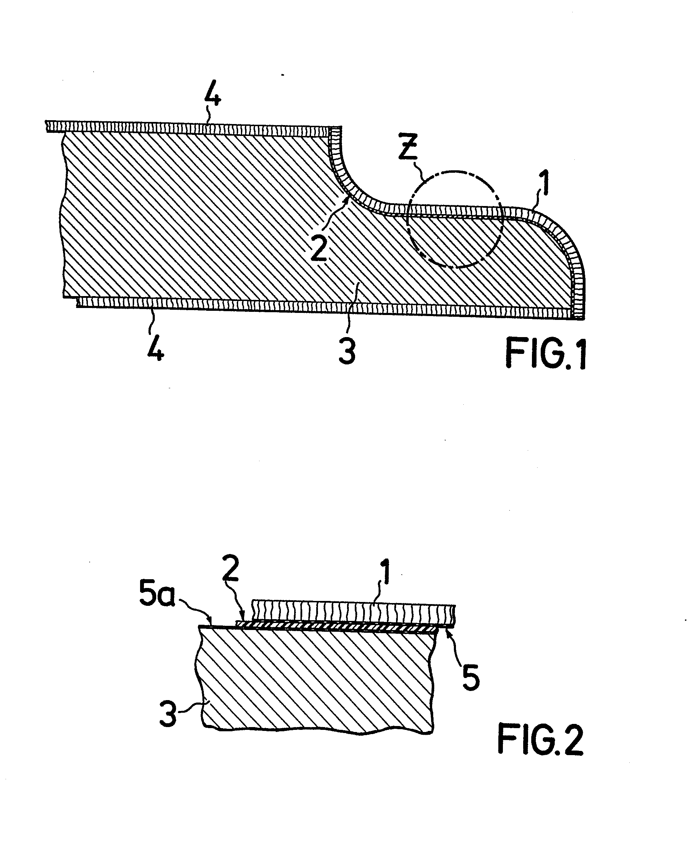

Die Erfindung wird durch die Zeichnung verdeutlicht. Figur 1 zeigt einen Querschnitt durch eine Holzspanplatte (3), die beidseitig mit einem Furnier (4) versehen ist und an der Kante ein S-Profil aufweist. Diese profilierte Kante ist mit dem erfindungsgemäßen Schichtwerkstoff kaschiert, der aus dem Holzfurnier (1) und der Polyvinylalkohol-Folie (2) zusammengesetzt ist. Figur 2 zeigt den Ausschnitt Z, aus dem ersichtlich ist, daß das Holzfurnier (1) über eine Klebstoff-Schicht (5) mit der Folie (2) verbunden ist, die ihrerseits über die Klebstoff-Schicht (5a) mit der Spanplatte (3) verbunden ist.

Die folgenden Beispiele dienen zur näheren Erläuterung der Erfindung. Prozentangaben beziehen sich jeweils auf das Gewicht.

- 7 -

## Beispiel 1

Ein Eichenfurnierstreifen (Messerfurnier) mit einer Dicke von 0,6 mm wurde einseitig mit Hilfe einer Leimauftragswalze mit einem handelsüblichen Polyvinylacetatleim in einer Menge von 50 g/m$^2$ beschichtet. Auf die nasse Klebstoffschicht wurde eine in kaltem Wasser unlösliche Folie aus Polyvinylalkohol, der eine Esterzahl von 10 mg KOH/g und dessen 4prozentige wäßrige Lösung bei 20$^o$C eine Viskosität von 20 mPa.s aufwies, mit Hilfe eines auf 90$^o$C geheizten Druckbandes bei einem Druck von 4 bar gedrückt. Die Dicke der Folie betrug 0,05 mm und die Andruckzeit 10 Sekunden.

## Beispiel 2

Eine in kaltem Wasser unlösliche, 0,05 mm dicke Folie aus Polyvinylalkohol, der eine Esterzahl von 10 mg KOH/g und dessen 4prozentige wäßrige Lösung bei 20$^o$C eine Viskosität von 20 mPa.s aufwies, wurde einseitig mit Hilfe einer Leimauftragswalze mit einem handelsüblichen Polyvinylacetatleim in einer Menge von 50 g/m$^2$ beschichtet. Die Folie wurde mit der beschichteten Seite auf einen 0,6 mm dicken Nußbaumfurnierstreifen (Messerfurnier) gedrückt; dazu wurde ein auf 90$^o$C geheiztes Druckband verwendet, und die Andruckzeit betrug 5 Sekunden bei einem Druck von 4 bar.

## Beispiel 3

Fünf Kirschbaumfurnierstreifen (Messerfurnier) mit einer Dicke von jeweils 0,6 mm wurden mit ihren Längsseiten dicht nebeneinander gelegt. Eine zuvor mit Hilfe einer Leimauftragswalze mit einem handelsüblichen Polyvinylacetatleim beschichtete Folie aus Polyvinylalkohol, der eine Esterzahl von 10 mg KOH/g und dessen 4prozentige wäßrige Lösung bei 20°C eine Viskosität von 20 mPa.s aufwies, wurde dann mit der beschichteten Seite auf die Furnierstreifen gedrückt. Die Folie, die in kaltem Wasser unlöslich war, hatte eine Dicke von 0,03 mm, und der Klebstoff wurde in einer Menge von 60 g/m$^2$ eingesetzt. Das Andrücken der Folie an die Furnierstreifen erfolgte mit einem auf 90°C geheizten Druckband, und die Andruckzeit betrug 6 Sekunden bei einem Druck von 5 bar.

Anwendungsbeispiel

Eine beidseitig mit einem Nußbaumfurnier beschichtete Spanplatte wurde an einer Kante mit Hilfe einer Fräse mit einem S-Profil versehen. Auf dieses Profil, das eine Hohlkehle und eine Rundung aufwies, wurde mittels einer Rolle ein handelsüblicher Polyvinylacetatleim in einer Menge von 150 g/m$^2$ gleichmäßig aufgetragen. Durch Bestrahlen mit einer Infrarotlicht-Lampe wurde die Klebschicht weitgehend getrocknet. Auf die noch etwas feuchte, heiße Klebstoffschicht wurde der nach Beispiel 2 erhaltene Schichtwerkstoff mit der Folienseite aufgebracht und mit einer auf 80°C geheizten Walze 5 Sekunden lang angedrückt. Die überstehenden Teile des Schichtwerkstoffs wurden anschließend abgefräßt (vgl. Fig. 1).

PATENTANSPRÜCHE:

1. Schichtwerkstoff auf Basis eines Holzfurniers, dadurch gekennzeichnet, daß er aus einem Holzfurnier mit einer Dicke von 0,4 bis 2,0 mm besteht, das mindestens einseitig mittels eines Klebstoffs mit einer Folie aus Polyvinylalkohol, deren Dicke 0,01 bis 0,5 mm beträgt, verbunden ist.

2. Schichtwerkstoff nach Anspruch 1, dadurch gekennzeichnet, daß die Folie aus einem Polyvinylalkohol besteht, der eine Esterzahl von 0 bis 200 mg KOH/g und dessen 4gewichtsprozentige wäßrige Lösung bei einer Temperatur von 20°C eine Viskosität von 4 bis 100 m Pa·s aufweist.

3. Schichtwerkstoff nach Anspruch 1, dadurch gekennzeichnet, daß die Folie in Form getrennter Streifen mit dem Holzfurnier verbunden ist.

4. Schichtwerkstoff nach Anspruch 1, dadurch gekennzeichnet, daß der Klebstoff ein Dispersionsklebstoff auf Basis eines Kunstharzes ist.

5. Verfahren zur Herstellung eines Schichtwerkstoffs auf Basis eines Holzfurniers durch Verbindung eines Holzfurniers mit einem elastischen, schichtförmigen Werkstoff, dadurch gekennzeichnet, daß ein Holzfurnier mit einer Dicke von 0,4 bis 2,0 mm mindestens einseitig mittels eines Klebstoffs mit einer Folie aus Polyvinylalkohol, deren Dicke 0,01 bis 0,5 mm beträgt, verbunden wird.

6. Verwendung des Schichtwerkstoffs nach Anspruch 1 als Material zum Furnieren von Gegenständen aus Vollholz oder Holzwerkstoff.

FIG.1

FIG.2